# EUROPÄISCHE PATENTSCHRIFT

(11) **EP 0 996 105 B1**
(45) Veröffentlichungstag und Bekanntmachung des Hinweises auf die Patenterteilung: **29.01.2003**
(21) Anmeldenummer: 99117640.5
(22) Anmeldetag: 08.09.1999
(51) Int. Cl.: G08C 17/02

(54) **System zur Überwachung, Steuerung, Verfolgung und Handling von Objekten**
System for monitoring, steering, tracking and handling of objects
Système pour surveiller, controler, poursuivre et manipuler des objets

(30) Priorität: 29.09.1998 DE 19844631
(43) Veröffentlichungstag der Anmeldung: 26.04.2000
(73) Patentinhaber: Identec Solutions AG, 6890 Lustenau (AT)
(72) Erfinder: Gantner, Wilhelm, 6780 Schruns (AT); Gantner, Reinhold, 6700 Bludenz (AT); Schedler, Gerhard, 9493 Mauren (LI)
(74) Vertreter: Riebling, Peter, Dr.-Ing.

(56) Entgegenhaltungen:
- EP-A- 0 744 627
- EP-A- 0 744 727
- GB-A- 2 283 845
- US-A- 5 347 274

## Beschreibung

Die Erfindung betrifft ein System zur Identifikation und Überwachung von mindestens einem Objekt nach dem jeweiligen Oberbegriff der unabhängigen Patentansprüche.

Es sind Identifikations- und Überwachungssysteme bekannt, die darauf basieren, daß an den zu überwachenden Objekten Anhänger oder Etiketten mit einem darauf gedruckten Barcode befestigt werden. Diese Systeme haben allerdings den Nachteil, daß der Barcode verschmutzen kann oder sogar ganz vom Objekt getrennt werden kann, so daß eine Identifizierung nicht mehr möglich ist. Ferner ist es nicht möglich, ein Barcode-Etikett über eine grössere Entfernung auszulesen.

Ebenso sind passive Transpondersysteme bekannt, die erst beim Eindringen in den Sende-/Empfangsbereich eines Lesegeräts aktiviert werden und darauf ihre Informationen übermitteln. Die von diesen Transpondern zu speichernde Datenmenge ist gering. Ebenso können diese Transponder nicht über grössere Entfernungen angesprochen werden.

Beiden oben genannten Systemen fehlt die Möglichkeit, die Umwelt- und/oder Transportbedingungen lückenlos zu überwachen.

Das Dokument GB-A-2 283 845 offenbart ein System zur Überwachung der Temperatur von Nahrungsmitteln, welches eine Vielzahl von unabhängigen Sensoreinheiten umfasst, welche die Temperatur der Nahrungsmittel erfassen, wobei eine ortsfeste Kontrolleinheit vorhanden ist, mittels der die erfassten Temperaturwerte der Sensoren drahtlos abgefragt werden können. Es handelt sich hier im wesentlichen um ein ortsfestes System zur Überwachung von Nahrungsmitteln innerhalb eines definierten Lagerraums.

Die US-A-5 347 274 betrifft ein System zur Überwachung von Gefahrenguttransporten. Mittels einem am Gefahrenguttransport angeordneten Transponder wird der Zustand des Gefahrenguts erfasst und über ein Netzwerk von Sende-/Empfangsstationen, welche entlang der Fahrtroute des Transportes angeordnet sind und den Transponder beim Passieren aktivieren, an eine Datenmanagementzentrale weitergeleitet.

Die oben beschriebenen Systeme sind zwar für gut Übetwachungsaufgaben jedoch nicht für eine Einbindung in ein Transport und Lagermanagementsystem geeignet.

Der Erfindung liegt daher die Aufgabe zugrunde, ein System der eingangs genannten Art zu schaffen, welches zuverlässig arbeitet und eine äußerst effektive Lagerführung, eine Optimierung der Distribution und eine Kontrolle der Umwelt- und/oder Transportbedingungen ermöglicht.

Diese Aufgabe wird durch die kennzeichnenden Merkmale der unabhängigen Patentansprüche gelöst.

Erfindungsgemäss wird ein System zur Identifikation und Überwachung von mindestens einem Objekt vorgeschlagen, welches zumindest aus einer stationären oder mobilen Schreib-/Lesestation mit interner oder abgesetzter Antenne und mindestens einem, direkt am Objekt montierten mobilen Datenträger besteht. Der mobile Datenträger besitzt eine Unikatsnummer für die eindeutige Identifikation und einen Speicherbereich für objektspezifische Daten. Weiters erlaubt der mobile Datenspeicher durch einen intern oder extern angeschlossenen Meßsensor die Überwachung der Umgebungsbedingungen des Objektes. Die vom Meßsensor erfassten Umweltdaten / Meßwerte sind Daten über Temperatur, Luftfeuchtigkeit, Lüftdruck, Lichteinwirkung, Erschütterung, Schadstoffwerte, Lagerzustände und dergleichen. Diese Daten können direkt übermittelt, oder im mobilen Datenträger aufgezeichnet werden. Der Datenaustausch erfolgt über eine drahtlose Schnittstelle über kleine bis mittlere Distanzen. Die Daten können zyklisch vom mobilen Datenträger an die Schreib-/Lesestation übertragen oder auf Anfrage der Schreib-/Lesestation übertragen werden. Dabei können mehrere, sich gleichzeitig im Arbeitsbereich der Antenne befindliche mobile Datenträger, behandelt werden.

Die Erfindung weist den Vorteil auf, daß sie sich durch die Kombination von innovativer Identifikationstechnik mit innovativer Meßtechnik beim mobilen Datenträger für die oben beschriebene Aufgabe optimal eignet. Da der Datenträger ein aktives Element ist und kein passiver Transponder ergibt sich eine zuverlässige Überwachung des Objekts.

Die Möglichkeit, daß die Daten zyklisch, in einstellbaren Zeitabständen, vom mobilen Datenträger an eine Schreib-/Lesestation gesendet werden, ermöglicht eine automatische Erfassung aller in einem klar umrissenen Feld, auch bezeichnet als Überwachungsbereich, befindlichen mobilen Datenträger. Weiters erlaubt der integrierte oder extern angeschlossene Meßwertsensor eine ständige Kontrolle der Umwelt- und Lagerbedingungen. Mit dieser Technik können große Kosteneinsparungen, bei gleichzeitiger Steigerung der Erfassungssicherheit und Geschwindigkeit erzielt werden.
Weiters sichert die integrierte Empfangsschaltung das Beschreiben des mobilen Datenträgers mit objektspezifischen Daten, aber auch die sofortige, ständige Verfügbarkeit der Daten auf Anfrage der Schreib-/Lesestation. Somit kann jedes Objekt jederzeit, auch bei hohen Geschwindigkeiten, identifiziert werden. Weiters können spezifische Daten direkt beim Objekt gespeichert werden, was eine Automatisierung gewisser Abläufe bei der Distribution erlaubt. Aufgrund der gespeicherten Daten können z.B. Fehler beim Verladen oder Abladen des Objektes erkannt werden. Somit wird die Transparenz und die Liefersicherheit erhöht und die Kosten gleichzeitig gesenkt.

Der integrierte oder extern angeschlossene Meßsensor des mobilen Datenträgers erlaubt die Überwachung der Umgebungsbedingungen während des Transports und der Lagerung des Objektes. Befindet sich das Objekt dabei im Arbeitsbereich einer Schreib-/Lesestation, werden die Daten zyklisch oder auf Anfrage übertragen und/oder aufgezeichnet. Somit können die Umgebungsbedingungen jederzeit schnell an die individuellen Anforderungen des Objektes angepaßt werden. Befinden sich die Objekte außerhalb des Arbeitsbereiches einer Schreib-/Lesestation, werden die Daten im internen Datenspeicher des mobilen Datenträger aufgezeichnet. Diese Daten lassen sich dann jederzeit über eine drahtlose Schnittstelle mittels einer fix montierten oder mobilen Schreib-/Lesestation auslesen und auswerten. Somit lassen sich die Transportbedingungen und Lagerbedingungen jederzeit lückenlos überwachen. Dies erlaubt einen Nachweis über die Qualität und über das Einhalten vereinbarter oder gesetzlicher Grenzwerte. Gerade bei Reklamationen oder Schadensersatzansprüchen können diese Daten oft entscheidend sein.

System kann mehrere Datenträger nahezu gleichzeitig erkennen (Mehrfacherkennung), d.h. mehrere im Empfangsbereich befindliche Datenträger können gleichzeitig identifiziert und selektiv beschreiben bzw. gelesen werden.

Nachfolgend wird die Erfindung anhand eines Ausführungsbeispiels unter Bezugnahme auf mehrere Zeichnungsfiguren näher beschrieben. Aus den Zeichnungen und ihrer Beschreibung ergeben sich weitere Merkmale und Vorteile der Erfindung. Es zeigt:
- Figur 1:: ein Blockschaltbild eines mobilen Datenträgers;
- Figur 2:: ein Blockschaltbild eines Schreib-/Lesegeräts;
- Figur 3:: Anbringung des mobilen Datenträgers an einem Transportbehälter;
- Figur 4:: Anwendung des Systems bei der Lagerhaltung:
- Figur 5:: Anwendung des Systems bei der Transportverfolgung;
- Figur 6:: Programmieren und Auslesen des Datenträgers bei Anlieferung bzw. Auslieferung;
- Figur 7:: schematische Darstellung des Zusammenwirkens von Datenträger, Schreib-/Lesegerät und Kontrolleinheit.

### Mobiler Datenträger

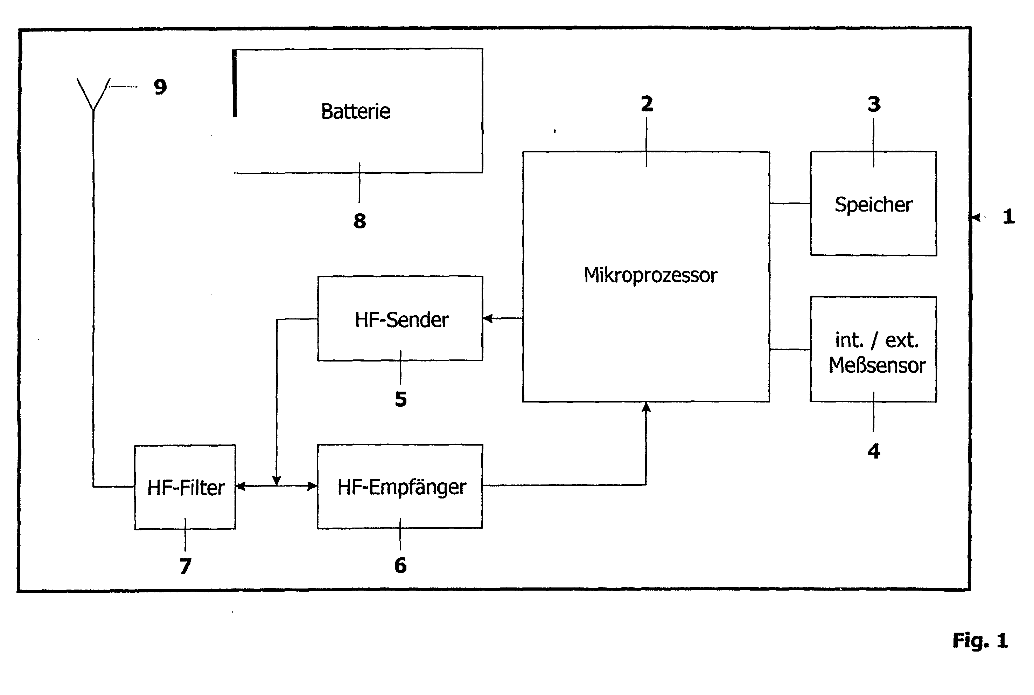

Gemäß Figur 1 umfasst der mobile Datenträger 1 einen Mikroprozessor 2 und ausreichend bemessenen nichtflüchtigen Speicher 3 und integrierte oder extern anschließbare Sensoren, im gezeigten Beispiel einen Temperatursensor 4, zur Erfassung von Umweltdaten, wie z.B. die Umgebungstemperatur oder Temperatur innerhalb eines Transportbehälters. Eine Erfassung anderer Meßwerte oder Lagerzustände ist ebenso möglich.

Ferner umfasst der Datenträger eine Sendeeinheit 5 und eine Empfangseinheit 6, sowie einen Filter in Verbindung mit einer HF-Weiche 7, die mit einer Antenne 9 verbunden ist. Die Stromversorgung erfolgt vorzugsweise durch eine Batterie 8. Stromversorgung und Stromverbrauch der Einheit sind auf eine Lebensdauer von mehreren Jahre ausgelegt.

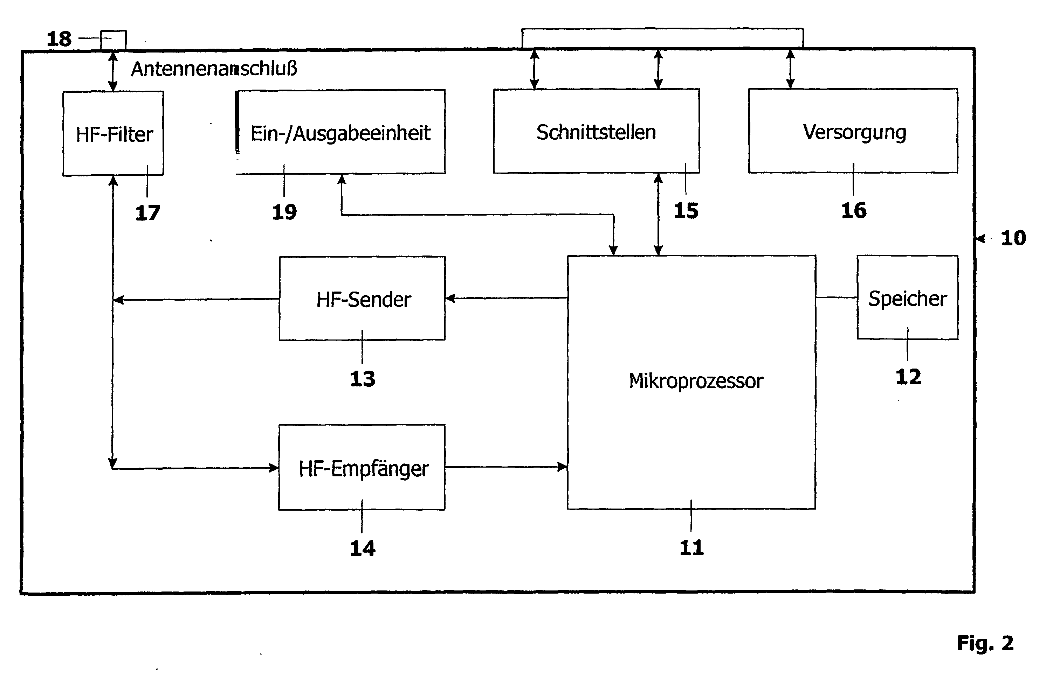

Wenn der mobile Datenträger 1 aktiviert ist und in den Arbeitsbereich eines Schreib-/Lesegeräts 10 (Figur 2) gelangt, beginnt er, automatisch eine im Speicher 3 abgespeicherte Identifikationsnummer und andere Daten in bestimmten Intervallen auszusenden. Das jeweilige Schreib-/Lesegerät 10 empfängt diese Daten permanent. Falls das System keine Daten mehr von einem bestimmten mobilen Datenträger 1 empfängt, aus welchen Grund auch immer, meldet das System die Abwesenheit dieses Datenträgers. Die verantwortliche Person wird also informiert und kann sofort entsprechende Maßnahmen ergreifen.

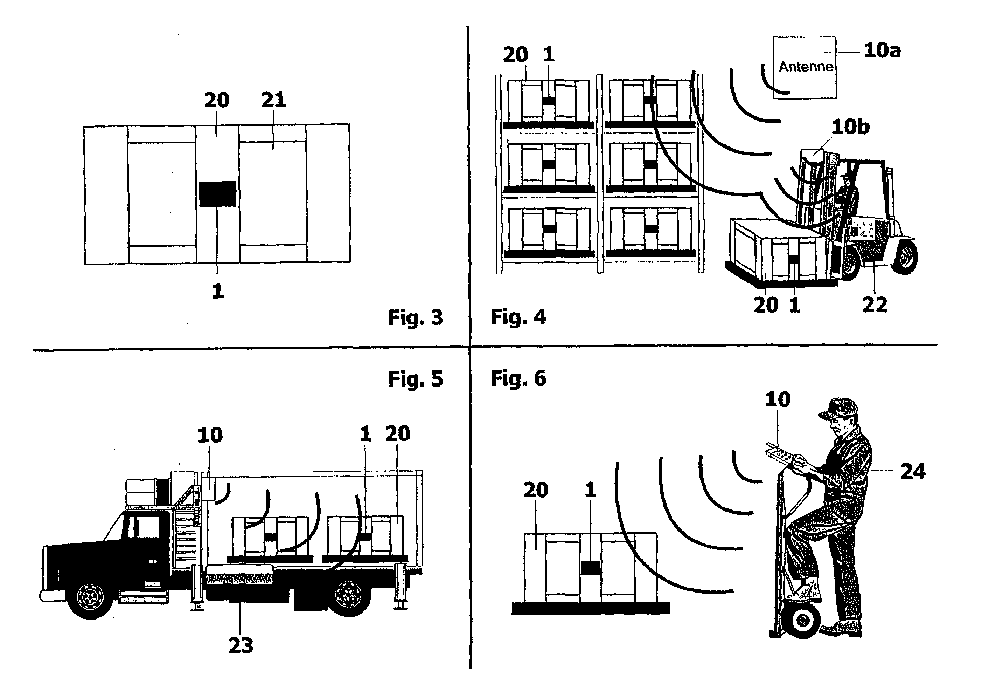

Der Temperatursensor 4 ermöglicht eine ununterbrochene Überwachung der Temperatur während des Transports eines mit dem Datenträger verbundenen Transportbehälter 20 (Figur 3) und seines Inhalts. Die Temperaturdaten können jederzeit abgefragt werden um sicherzustellen, dass die vorgegebenen Temperaturgrenzwerte während des Transports nicht überschritten wurden. Dabei kann selbstverständlich durch den Benutzer eingestellt werden, wieviel Speicherbereich zur Speicherung der Temperaturdaten zur Verfügung steht und wie oft und in welchen Zeitabständen die Temperatur gemessen werden soll. Vorzugsweise werden dabei die jeweiligen maximalen und minimalen Temperaturwerte separat abgespeichert, um Überschreitungen der Vorgabewerte schnell zu erkennen. Zusammen mit den Temperaturwerten werden noch Datum und Uhrzeit aufgezeichnet, so dass sich Überschreitungen der Grenzwerte genau zurückverfolgen lassen. Dafür ist im Mikroprozessor eine Zeitbasis eingerichtet.

Der Benutzer kann den mobilen Datenträger 1 individuell programmieren, um z.B. 0, 200 oder 1000 Temperaturwerte aufzuzeichnen. Die erfassten Daten werden im Speicher 3 abgelegt, wobei eine Auflösung von 8 Bit pro Meßwert ausreichend ist. Ferner kann eingestellt werden, dass die Temperatur z.B. alle 10 Minuten gemessen wird. Genauso gut kann die Meßperiode auf 60 Minuten eingestellt werden.

Es wird eine möglichst kurze Sende- oder Übertragungszeit der Daten angestrebt. Dies ist es sinnvoll, um trotz grosser Lagerbestände eine schnelle Erfassung aller an den Transportbehältern angebrachten Datenträger zu ermöglichen. Zur Verkürzung der Übertragungszeit werden vorzugsweise nicht alle gemessenen und gespeicherten Temperaturdaten ausgesendet, sondern lediglich die bisher gemessenen Minimal- bzw. Maximalwerte. Dabei kann der Benutzer auswählen, ob z.B. die Maximal- und Minimalwerte aller bisherigen Meßwerte übertragen werden sollen, oder aber das Maximum und Minimum der letzen 10, 50, 100 etc. Messungen.

Ferner ist im Speicher 8 ein geschützter, nur einmal beschreibbarer Speicherbereich vorgesehen, im welchem z.B. die eindeutige Indentifikationsnummer des Datenträgers, die Identifikation des Eigentümers und weitere geschützte Daten abgelegt sind. Diese geschützten Daten werden einmalig beim Herstellungsprozess eingespeichert und können nicht mehr verändert werden.

Bei normalem Betrieb sendet der Datenträger 1 seine Daten z.B. alle 15 Minuten selbständig im Broadcastverfahren aus. Diese Zeitspanne kann natürlich beliebig eingestellt werden. Zwischen den vorgesehenen Sendeintervallen lassen sich die Daten jederzeit auf Anfrage durch ein Schreib-/Lesegerät 10 auslesen.

### Schreib-/Lesegerät

Wie in Figur 2 dargestellt ist, ist das mobile Schreib-/Lesegerät 10 ein handzuhaltendes mobiles oder ein ortsfest montiertes Gerät, mit welchen Daten auf den Datenträger 1 geschrieben und von diesem gelesen werden können. Mit dem mobilen Schreib-/Lesegerät 10 kann der Datenträger programmiert 1 werden und dessen Speicher komplett ausgelesen werden.

Bei mobilen Schreib-/Lesegeräten 10 wird zum Beschreiben und Programmieren eines Datenträgers 1 vorzugsweise eine sehr geringe Sendeleistung verwendet, so dass nur Datenträger 1 im Umkreis von z.B. 5 Metern angesprochen werden können. Dies hilft dem Anwender, zwischen den verschiedenen Datenträgern 1 zu unterscheiden und den richtigen Datenträger anzusprechen. Ein Lesen der Datenträger 1 ist im Umkreis von mindestens ca. 30 Metern möglich.

Das Schreib-/Lesegerät ist durch einen Mikroprozessor 11 gesteuert und besitzt einen ausreichend bemessenen Speicher 12, zur Speicherung der von einem Datenträger 1 ausgelesenen Daten bzw. in einen Datenspeicher 1 einzuschreibenden Daten. Ferner umfasst das Schreib-/Lesegerät eine Ein-/Ausgabeeinheit 19 in Form einer alphanumerischen Tastatur und einer mehrzeiligen Anzeige. Ferner ist mindesten eine Schnittstelle 15 zur Kommunikation mit einer Kontrollinstanz, z.B. einem Personal Computern, vorhanden. Die Schnittstelle 15 kann z.B. als RS232-, RS485-Schnittstelle ausgebildet sein, kann aber auch eine IR-Schnittstelle, Funkschnittstelle oder eine andere leitungsgebundene oder drahtlose Schnittstelle sein.
Zur Kommunikation mit einem Datenträger 1 sind eine Sendeeinheit 13 und eine Empfangseinheit 14 vorgesehen, die über einen Filter/Weiche 17 mit einem Antennenanschluss/einer Antenne 18 verbunden sind.

Bei mobilen Schreib-/Lesegeräten erfolgt die Stromversorgung 16 vorzugsweise mittels einer Batterie, wobei bei ortsfesten Schreib-/Lesegeräten eine Stromversorgung 16 aus den Netz bevorzugt wird.

Das Schreib-/Lesegerät 10 arbeitet in Echtzeit, so dass die Datenträger 1 in Echtzeit programmiert und aktiviert werden können. Wenn die Transportbehälter 20 z.B. in ein Warenlager gebracht werden um eine Ware aufzunehmen, kann der am Transportbehälter 20 befestigte Datenträger 1 entsprechend dieser Waren programmiert und aktiviert werden, so dass diese periodisch seine Identifikationskennung und andere ausgewählte Daten aussendet. Der Transportbehälter 20 mit der Ware ist dem System nun bekannt und kann entsprechend überwacht werden.

Das ortsfeste Schreib-/Lesegerät 10 ist im wesentlichen gleich aufgebaut wie das mobile Schreib-/Lesegerät. Es wird benutzt, um in einem definierten Arbeitsbereich alle darin befindlichen Datenträger 1 abzuhören und die von diesen gesendeten Daten zu erfassen. In einem Arbeitsbereich bzw. Überwachungsbereich, die z.B. ein Lagerhaus darstellt, können natürlich auch mehrere ortsfeste Schreib-/Lesegeräte 10 vorhanden sein, um den gesamten Bereich abzudecken. Jedes ortsfeste Schreib-/Lesegerät 10 deckt etwa einen Bereich im Umkreis von 30 m ab. In freiem Gelände können es bis zu 300 m sein.

Figur 3 zeigt, wie der mobile Datenträger 1 an einem Transportbehälter, z.B. einer Palette oder einem Container, angebracht ist. Der Datenträger 1 ist mit den kennzeichnenden Daten des im Transportbehälter aufgenommenen Transportgutes 21 programmiert, und sendet permanent seine eigene Kennung, die Daten des Transportgutes und gegebenenfalls Umweltdaten und andere Meßwerte aus.

Wie in Figur 4 dargestellt ist, befinden sich in einem Lagerhaus mehrere solcher Transportbehälter 21, jeder ausgestattet mit einem individuellen Datenträger 1. Ein fest angeordnetes Schreib-/Lesegerät 10a überwacht nun den Bereich des Lagerhauses, erfasst die von den Datenträgern 1 ausgesendeten Daten, speichert diese ab und wertet diese aus. Natürlich kann auf Anforderung des Schreib-/Lesegeräts 10a jeder einzelne Datenträger 1 direkt angesprochen werden und seine Daten ausgelesen werden. Sobald nun ein neuer Transportbehälter 20 mittels eines Transportfahrzeugs 22 im Lager eintrifft, wird dieser anhand der ausgesendeten Daten seines Datenträgers erkannt und vom Schreib-/Lesegerät 10a automatisch erfasst. Dabei wird auch die Art und Menge etc. des Lagergutes automatisch erfasst. Wird ein Transportbehälter aus dem Lager entfernt, so wird dies natürlich ebenfalls automatisch durch das Schreib-/Lesegerät 10a erfasst und gemeldet.

Das Transportfahrzeug 22 besitzt ebenfalls ein Schreib-/Lesegerät 10b, welches der Bedienperson Informationen über den Besitzer, die Menge und die Art der transportieren Waren gibt, so dass die Ware am vorgesehenen Ort gelagert werden kann.

In Figur 5 ist die Überwachung und Transportverfolgung von Transportbehältern 20 innerhalb eines Lastkraftwagen 23 dargestellt. Der LKW 23 ist mit einem Schreib-/Lesegerät 10 ausgerüstet, welches permanent die von den Datenträgern 1 ausgesendeten Daten erfasst und auswertet. Die Datenträger messen dabei z.B. in vorgegebene Abständen die Temperatur im Transportbehälter und speichern diese ab. Überschreitet oder unterschreitet die gemessene Temperatur einen vorgegebenen Wert, so wird dies an das Schreib-/Lesegerät gemeldet und eine Warnmeldung ausgelöst. Der Fahrer kann dann die notwendigen Gegenmaßnahmen einleiten.

Figur 6 zeigt die mobile Erfassung eines angelieferten bzw. auszuliefernden Transportbehälters 20. Von einer Bedienperson 24 werden mittels eines mobilen Schreib-/Lesegeräts 10 die entsprechenden Daten aus dem Datenträger 1 ausgelesen bzw. in diesen eingeschrieben.

### Kontrolleinheit

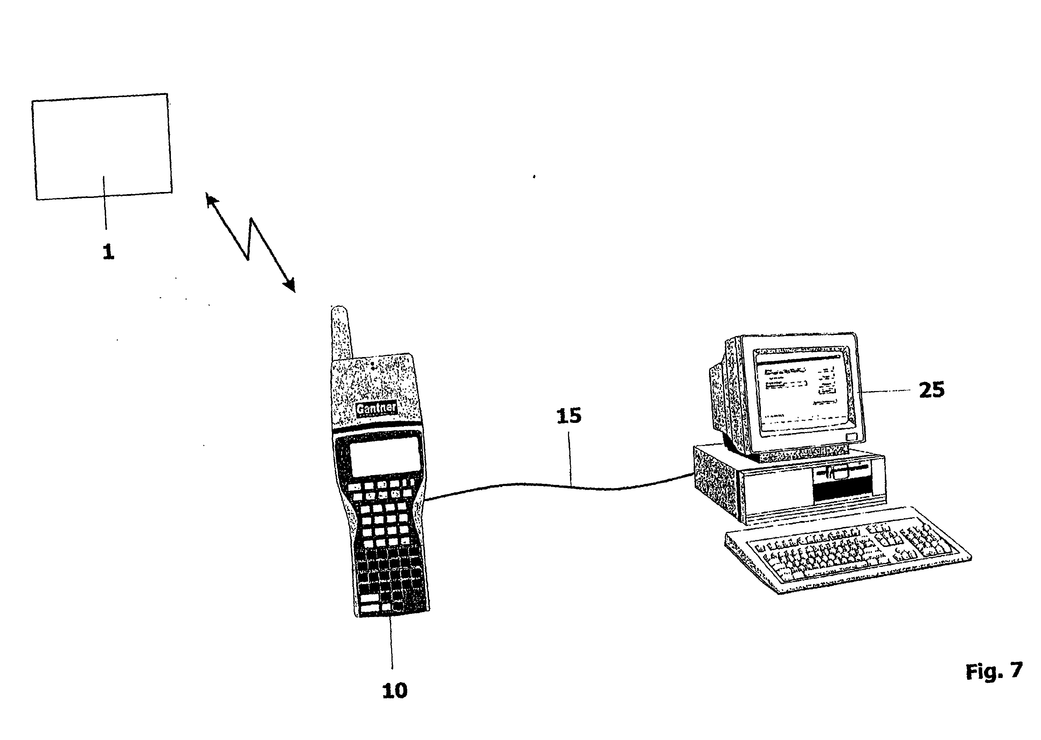

Wie in Figur 7 dargestellt ist, erfolgt die Auswertung der vom Schreib-/Lesegerät 10 erfassten Daten über eine Kontrolleinheit 25, die z.B. durch einen Personal Computer realisiert sein kann. Mit Hilfe der jeweils einem Objekt zugeordneten Datenträger 1 und der Schreib-/Lesegeräte 10 ist eine sehr genaue Erfassung und Verfolgung von Objekten, wie z.B. Transportbehältern 20 oder Containern, möglich. Die Kontrolleinheit 25 hat vorzugsweise folgende Funktionen:
- Kommunikation mit den Schreib-/Lesegeräten 10 über eine Standardisierte Schnittstelle 15.
- Erfassen, Speichern und Auswerten von Daten der Datenträger 1, die mit den Schreib-/Lesegeräten erfasst 10 wurden.
- Darstellung und Ausgabe der erfassten Daten in Form von Listen, Grafiken, etc.
- Kommunikation mit anderen Kontrolleinheiten, z.B. die im selben oder einem anderen Lagerhaus angeordnet sind, z.B. über Modemverbindung.
- Interfacefunktionen zu vorhandenen Kontrollsystemen und Systemsoftware, z.B. Lagermanagementsystem, Transportsystemen, Zugangskontrollsystemen etc.
- Automatische Überwachung des Lagerbestands.

### Zeichnungslegende

- 1: Mobiler Datenträger
- 2: Mikroprozessor
- 3: Speicher
- 4: Temperatursensor
- 5: Sendeeinheit
- 6: Empfangseinheit
- 7: Filter/Weiche
- 8: Batterie
- 9: Antenne
- 10: Schreib-/Lesegerät
- 11: Mikroprozessor
- 12: Speicher
- 13: Sendeeinheit
- 14: Empfangseinheit
- 15: Schnittstelle
- 16: Stromversorgung
- 17: Filter/Weiche
- 18: Antenne/Antennenanschluss
- 19: Ein-/Ausgabeeinheit
- 20: Transportbehälter
- 21: Transportgut
- 22: Transportfahrzeug
- 23: Lastkraftwagen
- 24: Bedienperson
- 25: Kontrolleinheit

## Patentansprüche

1. System zur Identifikation und Überwachung von mindestens einem Objekt (20), **gekennzeichnet durch**
mindestens ein Schreib-/Lesegerät (10) und mindestens einen, genau einem Objekt (20) zugeordneten, direkt am Objekt befestigten und permanent mit dem Objekt mitgeführten mobilen Datenträger (1), der Mittel (2, 3) zur Speicherung von Identifikationsdaten und objektspezifischen Daten aufweist, sowie Mittel (5-7, 9) zur drahtlosen Übertragung der Daten an das Schreib-/Lesegerät (10), wobei der mobile Datenträger (1) ferner Mittel (4) zur Erfassung und
Speicherung von Umweltdaten oder anderen Messwerten aufweist, wobei die Identifikationsdaten oder objektspezifischen Daten oder Umweltdaten/Meßwerte in vorgebbaren Zeitabständen automatisch im Rundfunkverfahren ausgesendet oder auf Anfrage des Schreib-/Lesegerätes (10) an dieses übermittelt werden, wobei in einem Speicher (3) zusammen mit den Umweltdaten/Messwerten jeweils Datum und Uhrzeit abgespeichert werden, und in einem Speicher (8) des Datenträgers (1) ein geschützter, nur einmal beschreibbarer Speicherbereich vorgesehen ist, der beim Herstellungsprozess beschrieben wird und nicht veränderlich ist und in welchem eine eindeutige Identifikationsnummer des Datenträgers abgelegt ist, wobei das Schreib-/Lesegerät (10) derart ausgebildet ist, um alle in einem definierten Überwachungsbereich befindliche mobile Datenträger (1) automatisch zu erfassen.

2. System nach Anspruch 1, **dadurch gekennzeichnet, daß** das Schreib-/Lesegerät (10) stationär ausgebildet ist.

3. System nach Anspruch 1, **dadurch gekennzeichnet, daß** das Schreib-/Lesegerat (10) mobil ausgebildet ist.

4. System nach einem der Ansprüche 1 bis 3, **dadurch gekennzeichnet, daß** zur Erfassung der Umweltdaten/Messwerte Meßsensoren (4) intern oder extern an den Datenträger (1) angeschlossenen sind.

5. System nach einem der Ansprüche 1 bis 4, **dadurch gekennzeichnet, daß** der Datenträger (1) einen Mikroprozessor (2), einen nichtflüchtigen Speicher (3), eine Sende-/Empfangseinrichtung (5-6,9), integrierte oder extern anschließbare Sensoren (4) zur Erfassung von Umweltdaten/Meßwerten und eine unabhängige Stromversorgung (8) umfasst.

6. System nach einem der Ansprüche 1 bis 5, **dadurch gekennzeichnet, daß** das Schreib-/Lesegerät einen Mikroprozessor (11), einen Speicher (12), eine Ein-/Ausgabeeinheit (19), eine Schnittstelle (15), eine Sende-/Empfangseinheit (14) und eine Stromversorgung (16) umfasst.

7. System nach einem der Ansprüche 1 bis 6, **dadurch gekennzeichnet, daß** die Schnittstelle (15) eine drahtlose oder drahtgebundene Schnittstelle zur Anbindung an eine Kontrolleinheit (25) ist.

8. Verfahren zur Identifikation und Überwachung von mindestens einem Objekt (20),
**gekennzeichnet durch:**
Anordnen mindestens eines Schreib-/Lesegerätes (10) innerhalb eines Überwachungsbereichs, Anbringen mindestens eines mobilen Datenträgers (1) an dem Objekt und permanentes Mitführen des Datenträgers mit dem Objekt, wobei auf dem Datenträger (1) Identifikationsdaten und objektspezifische Daten gespeichert sind, die drahtlos an das Schreib-/Lesegerät (10) übertragen werden, und vom mobilen Datenträger (1) ferner Umweltdaten oder andere Messwerte erfasst und gespeichert werden, wobei die Identifikationsdaten oder objektspezifischen Daten oder Umweltdaten/Messwerte in vorgebbaren Zeitabständen automatisch im Rundfunkverfahren ausgesendet oder auf Anfrage des Schreib-/Lesegerätes (10) an dieses übermittelt werden, wobei zusammen mit den Umweltdaten/Messwerten jeweils Datum und Uhrzeit in einem Speicher (3) abgespeichert werden, und in einem Speicher (8) des Datenträgers (1) ein geschützter, nur einmal beschreibbarer Speicherbereich vorgesehen ist, der beim Herstellungsprozess beschrieben wird und nicht veränderlich ist und in welchem eine eindeutige identifikationsnummer des Datenträgers abgelegt ist, und wobei eine Mehrfacherkennung von Datenträgern (1) möglich ist, wobei mehrere im Empfangsbereich des Schreib-/Lesegerätes (10) befindliche Datenträger (1) gleichzeitig identifiziert und selektiv beschrieben bzw. gelesen werden.

9. Verfahren nach Anspruch 8, **dadurch gekennzeichnet, daß** die Umweltdaten/Messwerte durch intern oder extern an des Datenträger (1) angeschlossenen Meßsensoren (4) erfasst werden.

10. Verfahren nach einem der Ansprüche 8 oder 9, **dadurch gekennzeichnet, daß** die Daten der Datenträger (1), die mit den Schreib-/Lesegeräten (10) erfasst wurden, durch eine Kontrolleinheit (25) erfasst und gespeichert und hinsichtlich ihres Dateninhalts ausgewertet und angezeigt werden.

## Claims

1. System for the identification and monitoring of at least one object (20), **characterised by** at least one read-write device (10) and at least one mobile data carrier (1) which is precisely allocated to an object (20), directly attached to the object and permanently carried with the object and which comprises means (2, 3) for the storage of identification data and object-specific data, as well as means (5-7, 9) for wireless transmission of the data to the write-read device (10), wherein the mobile data carrier (1) further comprises means (4) for the collection and storage of environmental data or other measurements, wherein the identification data or object-specific data or environmental data/measurements are automatically sent out by radio broadcasting at presettable intervals of time or, upon inquiry by the read-write device (10), transmitted to the latter, wherein in each case date and time are stored together with the environmental data/measurements in a memory (3), and in a memory (8) of the data carrier (1) is provided a protected memory area which can be written once only and which is written during the manufacturing process and is not alterable and in which is filed a unique identification number of the data carrier, wherein the read-write device (10) is constructed so as to automatically detect all mobile data carriers (1) located within a given monitoring range.

2. System according to claim 1, **characterised in that** the read-write device (10) is of stationary construction.

3. System according to claim 1, **characterised in that** the read-write device (10) is of mobile construction.

4. System according to one of claims 1 to 3, **characterised in that** measurement sensors (4) are internally or externally connected to the data carrier (1) for collection of the environmental data/measurements.

5. System according to one of claims 1 to 4, **characterised in that** the data carrier (1) includes a microprocessor (2), a non-volatile memory (3), a transmitting/receiving device (5-6, 9), integrated or externally connectable sensors (4) for the collection of environmental data/measurements and an independent power supply (8).

6. System according to one of claims 1 to 5, **characterised in that** the read-write device includes a microprocessor (11), a memory (12), an input/output unit (19), an interface (15), a transmitting/receiving unit (14) and a power supply (16).

7. System according to one of claims 1 to 6, **characterised in that** the interface (15) is a wireless or wired interface for connection to a control unit (25).

8. Method for the identification and monitoring of at least one object (20), **characterised by**: arrangement of at least one read-write device (10) within a monitoring range, mounting of at least one mobile data carrier (1) on the object and permanent carrying of the data carrier with the object, wherein on the data carrier (1) are stored identification data and object-specific data which are transmitted wirelessly to the write-read device (10), and furthermore environmental data or other measurements are collected and stored by the mobile data carrier (1), wherein the identification data or object-specific data or environmental data/measurements are automatically sent out by radio broadcasting at presettable intervals of time or, upon inquiry by the read-write device (10), transmitted to the latter, wherein in each case date and time are stored together with the environmental data/measurements in a memory (3), and in a memory (8) of the data carrier (1) is provided a protected memory area which can be written once only and which is written during the manufacturing process and is not alterable and in which is filed a unique identification number of the data carrier, and wherein multiple detection of data carriers (1) is possible, wherein several data carriers (1) located within receiving range of the read-write device (10) are simultaneously identified and selectively written or read.

9. Method according to claim 8, **characterised in that** the environmental data/measurements are collected by measurement sensors (4) internally or externally connected to the data carrier (1).

10. Method according to one of claims 8 or 9, **characterised in that** the data of the data carriers (1) which have been collected with the read-write devices (10) are collected by a control unit (25) and stored and evaluated for their data content and displayed.

## Revendications

1. Système pour identifier et surveiller au moins un objet (20), **caractérisé par**
au moins un appareil de lecture/écriture (10) et moins un support de données mobile (1) qui est associé exactement à un objet (20), qui est fixé directement à l'objet, qui est entraîné en permanence avec celui-ci et qui comporte des moyens (2, 3) pour mettre en mémoire des données d'identification et des données propres à l'objet, et des moyens (5, 7, 9) pour la transmission sans fil des données à l'appareil de lecture/écriture (10), étant précisé que le support de données mobile (1) comporte également des moyens (4) pour détecter et mettre en mémoire des données sur l'environnement ou d'autres valeurs de mesure, que les données d'identification ou les données propres à l'objet ou les données sur l'environnement/valeurs de mesure sont émises automatiquement par radio à intervalles réguliers aptes à être prédéfinis ou sont communiquées à l'appareil de lecture/écriture (10) à la demande de celui-ci, qu'à chaque fois, la date et l'heure sont stockées dans une mémoire (3) avec les données sur l'environnement/valeurs de mesure tandis qu'il est prévu dans une mémoire (8) du support de données (1) une zone de mémoire protégée, apte à recevoir une seul enregistrement, qui reçoit un enregistrement lors du procédé de fabrication, qui ne peut pas être modifiée et dans laquelle est stocké un numéro d'identification univoque du support de données, et que l'appareil de lecture/écriture (10) est conçu pour détecter automatiquement tous les supports de données mobiles (1) qui se trouvent dans une zone de surveillance définie.

2. Système selon la revendication 1, **caractérisé en ce que** l'appareil de lecture/écriture (10) est fixe.

3. Système selon la revendication 1, **caractérisé en ce que** l'appareil de lecture/écriture (10) est mobile.

4. Système selon l'une des revendications 1 à 3, **caractérisé en ce que** pour la détection des données sur l'environnement/valeurs de mesure, des capteurs de mesure (4) sont reliés de manière interne ou externe au support de données (1).

5. Système selon l'une des revendications 1 à 4, **caractérisé en ce que** le support de données (1) comprend un microprocesseur (2), une mémoire non volatile (3), un émetteur/récepteur (5-6, 9), des capteurs (4) intégrés ou aptes à être raccordés de manière externe pour détecter des données sur l'environnement/valeurs de mesure, et un bloc d'alimentation indépendant (8).

6. Système selon l'une des revendications 1 à 5, **caractérisé en ce que** l'appareil de lecture/écriture comprend un microprocesseur (11), une mémoire (12), une unité d'entrée/sortie (19), une interface (15), une unité d'émission/réception (14) et un bloc d'alimentation (16).

7. Système selon l'une des revendications 1 à 6, **caractérisé en ce que** l'interface (15) est une interface sans fil ou à fil à relier à une unité de contrôle (25).

8. Procédé pour identifier et surveiller au moins un objet (20), **caractérisé :**
**en ce qu'**au moins un appareil de lecture/ écriture (10) est disposé à l'intérieur d'une zone de surveillance, et au moins un support de données mobile (1) est fixé à l'objet et est entraîné en permanence avec celui-ci, étant précisé qu'on met en mémoire sur le support de données (1) des données d'identification et des données propres à l'objet qui sont transmises sans fil à l'appareil de lecture/écriture (10), et des données sur l'environnement et d'autres valeurs de mesure sont également détectées et mises en mémoire par le support de données mobile (1), que les données d'identification ou les données propres à l'objet ou les données sur l'environnement/valeurs de mesure sont émises automatiquement par radio à intervalles réguliers aptes à être prédéfinis ou sont communiquées à l'appareil de lecture/ écriture (10) à la demande de celui-ci, qu'à chaque fois, la date et l'heure sont stockées dans une mémoire (3) avec les données sur l'environnement/valeurs de mesure et il est prévu dans une mémoire (8) du support de données (1) une zone de mémoire protégée, apte à recevoir un seul enregistrement, qui reçoit un enregistrement lors du procédé de fabrication, qui ne peut pas être modifiée et dans laquelle est stocké un numéro d'identification univoque du support de données, et qu'une détection multiple de supports de données (1) est possible, plusieurs supports de données (1) qui se trouvent dans la zone de réception de l'appareil de lecture/écriture (10) étant identifiés simultanément et recevant un enregistrement ou étant lus sélectivement.

9. Procédé selon la revendication 8, **caractérisé en ce que** les données sur l'environnement/valeurs de mesure sont détectées grâce à des capteurs de mesure (4) reliés de manière interne ou externe au support de données (1).

10. Procédé selon la revendication 8 ou 9, **caractérisé en ce que** les données des supports de données (1) qui ont été détectées à l'aide des appareils de lecture/écriture (10) sont détectées grâce à une unité de contrôle (25) et mises en mémoire, et leur contenu est évalué et affiché.
